Europäisches Patentamt

European Patent Office

Office européen des brevets

(19)

(11) Publication number : **0 514 259 A1**

(12)

# EUROPEAN PATENT APPLICATION

(21) Application number : **92401298.2**

(22) Date of filing : **12.05.92**

(51) Int. Cl.⁵ : **B01D 53/34, B01D 47/02**

(30) Priority : **14.05.91 JP 109065/91**

(43) Date of publication of application :
**19.11.92 Bulletin 92/47**

(84) Designated Contracting States :
**DE FR GB IT**

(71) Applicant : **MITSUBISHI JUKOGYO
KABUSHIKI KAISHA
5-1, Marunouchi 2-chome Chiyoda-ku
Tokyo (JP)**

(72) Inventor : **Onizuka, Masakazu, c/o Hiroshima
Technical Inst.
Mitsub. Jukogyo K.K., 6-22 Kanonshin-machi
4-chome
Nishi-ku, Hiroshima, Hiroshima Pref. (JP)**

(74) Representative : **Rodhain, Claude et al
Cabinet Claude Rodhain 30, rue la Boétie
F-75008 Paris (FR)**

(54) Method for controlling the liquid level of exhaust gas scrubber and device therefor.

(57) A method for controlling the liquid level of an exhaust gas scrubber and a device therefor, said exhaust gas scrubber having a partition plate (5) whose lower part (6) is submerged in the scrubbing liquid (B) and whose upper part intercepts the gas flue (1, 2) above the level (3) of scrubbing liquid, wherein part of the wall of a scrubbing gas reservoir (7) on the treated gas side is opened to install an overflow port (8), a cover (9) which extends from the upper part of the overflow port and whose lower end is open in the scrubbing liquid stored in the scrubbing liquid reservoir is installed, an overflowing liquid receiver (15) is installed outside the overflow port, and a liquid level adjusting plate (10), which is movable, is installed at the lower end of the overflow port.

FIG. 1

FIELD OF THE INVENTION AND RELATED ART STATEMENT

This invention relates to a method for controlling the liquid level in a scrubbing liquid reservoir of an exhaust gas scrubber including a wet exhaust gas desulfurizer.

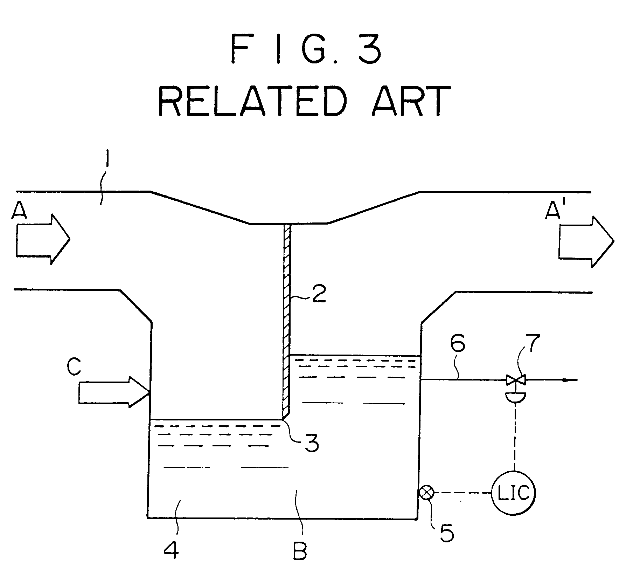

An embodiment of a wet exhaust gas desulfurizer disclosed by prior U.S. application filed by the applicant (this device is not publicly known) will be described with reference to Fig.3. In Fig.3, untreated gas A is introduced from one side of a gas flue 1 partitioned by a partition plate 2 which intercepts the gas flue. The gas A passes under the lower end of the partition plate and is brought into gas-liquid contact and treated for scrubbing. Then, it is exhausted as treated exhaust gas A' from the upper part of liquid on the other side of the gas flue. Regarding the scrubbing liquid, to prevent the level of liquid in a scrubbing liquid reservoir 4 from increasing, the increase being caused by the supply of scrubbing liquid C whose quantity corresponds to stoichiometric quantity of the substance absorbed by the treated gas A, the level of scrubbing liquid B in the scrubbing liquid reservoir 4 is detected by a liquid level detector 5, and excess scrubbing liquid is removed by the operation of a control valve 7 installed in a pipe 6 so that the liquid level is kept constant.

In scrubbing exhaust gas by partitioning the gas flue by the partition plate and by making the gas go through the scrubbing liquid into which the partition plate is submerged, the control of the level of scrubbing liquid is important for scrubbing efficiency. It is also important to control the submerged depth of partition plate in accordance with the change in pressure of untreated gas. In the above-described method, since excess scrubbing liquid is removed to control the liquid level by detecting the liquid level, even when the total liquid level from the level of scrubbing liquid to the detector changes slightly due to the control, the change in the submerged depth of partition plate sometimes becomes large, which causes excessive changes of scrubbing efficiency and inlet exhaust gas pressure.

OBJECT AND SUMMARY OF THE INVENTION

An object of this invention is to provide a method for controlling the liquid level of an exhaust gas scrubber, which can eliminate the disadvantages described above and stabilize the scrubbing efficiency and inlet exhaust gas pressure.

The first gist of this invention is a method for controlling the liquid level of an exhaust gas scrubber and a device therefor, the exhaust gas scrubber having a partition plate whose lower part is submerged in the scrubbing liquid And whose upper part intercepts the gas flue above the level of scrubbing liquid, wherein part of the wall of a scrubbing gas reservoir on the treated gas side is opened to install an overflow port, a cover which extends from the upper part of the overflow port and whose lower end is open in the scrubbing liquid stored in the scrubbing liquid reservoir is installed, an overflowing liquid receiver is installed outside the overflow port, and a liquid level adjusting plate, which is movable, is installed at the lower end of the overflow port.

The second gist of this invention is a method for controlling the liquid level of an exhaust gas scrubber in which the pressure of gas on the treated exhaust gas side of gas flue partitioned by the partition plate is processed to move the liquid level adjusting plate.

Since this invention has the above-described constitution, the submerged depth of the partition plate in the scrubbing liquid can be stabilized when exhaust gas is brought into gas-liquid contact with the scrubbing liquid in the process in which exhaust gas is introduced into one side of a gas flue partitioned by the partition plate, passes under the lower end of partition plate, and exhausted from the upper part of liquid on the other side of the gas flue.

BRIEF DESCRIPTION OF THE DRAWINGS

In the drawings,
Fig.1 is a schematic view of an embodiment of this invention,
Fig.2 is a partially expanded view of Fig.1, and
Fig.3 is a schematic view of an exhaust gas scrubber according to the prior U.S. application filed by the applicant of this application (not publicly known).

DETAILED DESCRIPTION OF A PREFERRED EMBODIMENT

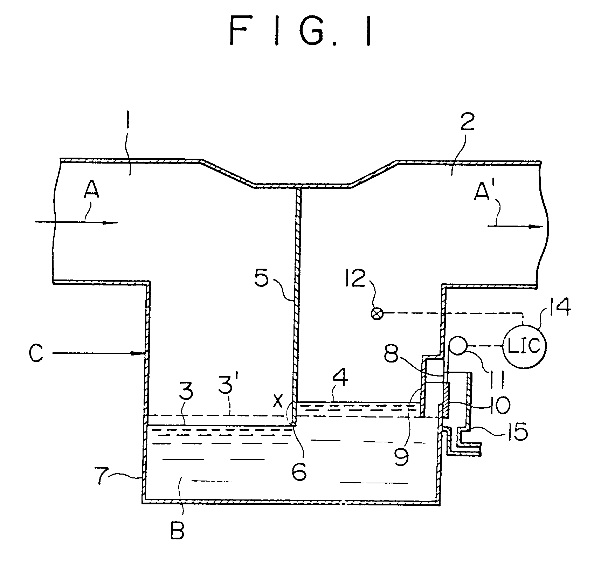

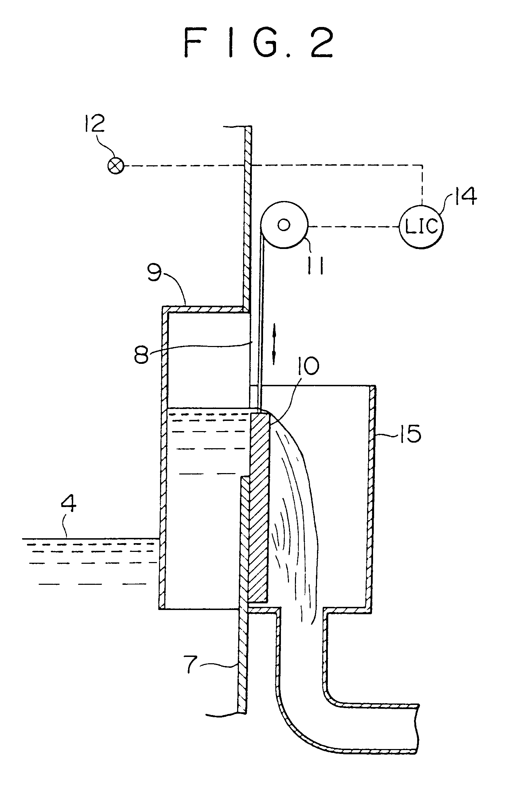

An embodiment of this invention will be described with reference to Figs.1 and 2.

Fig.1 is a sectional view illustrating the positioning of a device according to this invention in the entire exhaust gas scrubber. In Fig.1, untreated gas A from an inlet gas flue 1 presses down the liquid level 3', which is a level in the case where no gas flows, to the liquid level 3 by its pressure. The untreated gas A passes under the lower end 6 of the partition plate 5, being brought into gas-liquid contact with the scrubbing liquid B and treated, and goes out of the liquid on the outlet gas flue 2 side.

Then, the gas is exhausted through the outlet gas flue 2 as a treated exhaust gas A'. The scrubbing liquid C of a quantity corresponding to the quantity absorbed by the gas-liquid contact with untreated gas A is replenished into a scrubbing liquid reservoir 7. The increased quantity of scrubbing liquid B in the reservoir 7 due to the replenished scrubbing liquid C overflows through an overflow port 8 formed in the wall of the reservoir 7 on the outlet gas flue 2 side. The overflowing liquid reaches an overflowing liquid receiver 15 and goes out of the reservoir 7. The overflow port 8 is provided with a seal cover 9 which extends from the upper end of the overflow port 8 and whose lower end is submerged in the scrubbing liquid B in the reservoir 7 in order to prevent the treated gas A' from leaking. At the lower end of the overflow port 8, a liquid level adjusting plate 10 is installed. The liquid level adjusting plate 10 is operated by a driver 11, and the driver is operated by the instruction of a controller 14. This controller 14 controls the position of upper end of the liquid level adjusting plate 10 in accordance with the pressure detected by a gas pressure detector 12 on the outlet gas flue 2 side. Specifically, the controller 14 controls the position of upper end of the liquid level adjusting plate 10 in such a manner that a height of the sum of the above-mentioned pressure (the overflow height to be corrected in accordance with the above-mentioned pressure) and a submerged depth x of the partition plate 5 is attained. This is because the overflow height at the overflow port 8 increases in accordance with the pressure of gas in the outlet gas flue 2; therefore, adjustment must be made by adding that height to the submerged depth of the partition plate 5.

Fig.2 is an expanded sectional view of the portion near the overflow port 8, in which like reference numerals designate like parts in Fig.1.

This invention eliminates the change in exhaust gas scrubbing efficiency and inlet gas pressure due to unstable submerged depth of partition plate.

**Claims**

(1) A method for controlling the liquid level of an exhaust gas scrubber in which, in an exhaust gas scrubber having a partition plate whose lower part is submerged in the scrubbing liquid and whose upper part intercepts the gas flue above the level of scrubbing liquid, part of the wall of a scrubbing gas reservoir on the treated gas side is opened to install an overflow port, a cover which extends from the upper part of said overflow port and whose lower end is open in the scrubbing liquid stored in said scrubbing liquid reservoir is installed, a overflowing liquid receiver is installed outside said overflow port, and a liquid level adjusting plate, which is movable, is installed at the lower end of said overflow port.

(2) A method for controlling the liquid level of an exhaust gas scrubber in which the pressure of gas on the treated exhaust gas side of gas flue partitioned by said partition plate is processed to move said liquid level adjusting plate.

(3) A device for controlling the liquid level of exhaust gas scrubber having a partition plate whose lower part is submerged in the scrubbing liquid and whose upper part intercepts the gas flue above the level of scrubbing liquid, in which part of the wall of a scrubbing gas reservoir on the treated gas side is opened to install an overflow port, a cover which extends from the upper part of said overflow port and whose lower end is open in the scrubbing liquid stored in said scrubbing liquid reservoir is installed, a overflowing liquid receiver is installed outside said overflow port, and a liquid level adjusting plate, which is movable, is installed at the lower end of said overflow port.

# F I G. 1

# F I G. 2

# F I G. 3
# RELATED ART

**European Patent Office**

**EUROPEAN SEARCH REPORT**

Application Number

EP 92 40 1298

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-8 809 695 (NORTHERN STATES POWER COMPANY) <br> * page 5, paragraph 1 - page 8, paragraph 4; figures 2,4 * <br> --- | 1 | B01D53/34 <br> B01D47/02 |
| A | US-A-3 993 448 (LEROY LOWERY) <br> * column 3, line 3 - column 5, line 52; figure 1 * <br> ----- | 1,3 | |

| | | | TECHNICAL FIELDS SEARCHED (Int. Cl.5 ) |
|---|---|---|---|
| | | | B01D |

The present search report has been drawn up for all claims

| Place of search | Date of completion of the search | Examiner |
|---|---|---|
| THE HAGUE | 03 SEPTEMBER 1992 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)